# EUROPÄISCHE PATENTANMELDUNG

(11) **EP 4 607 398 A1**
(43) Veröffentlichungstag der Anmeldung: **27.08.2025**
(21) Anmeldenummer: 24159581.8
(22) Anmeldetag: 26.02.2024
(51) Int. Cl.: G06F 30/20, G05B 23/02, G06F 30/27, G06F 111/02, G06F 119/02

(54) **COMPUTERIMPLEMENTIERTES VERFAHREN ZUM GENERIEREN EINES VERÄNDERUNGSVORSCHLAGES FÜR EINEN SIMULATIONSLAUF UND ENTSPRECHENDE VORRICHTUNG ZUR DATENVERARBEITUNG**

(71) Anmelder: dSPACE GmbH, 33102 Paderborn (DE)
(72) Erfinder: Selbstreich, Eugen, 33102 Paderborn (DE); Miller, Eduard, 33102 Paderborn (DE); Koch, Markus, 33102 Paderborn (DE)

(57) **Zusammenfassung**

Die Erfindung betrifft ein computerimplementiertes Verfahren zum Generieren eines Veränderungsvorschlages für wenigstens einen Simulationslauf einer eine Vielzahl an Simulationsläufen umfassende Simulation, mit den Schritten:
- Empfangen einer Fehlerbeschreibung eines Simulationslaufes einer ersten Simulation, wobei der Simulationslauf, dessen Fehlerbeschreibung empfangen wird, auf einem ersten Parametersatz umfassend mehrere Parameterwerte basiert,
- Identifizieren von noch nicht beendeter Simulationsläufe der ersten Simulation oder einer zweiten Simulation mit einem in wenigstens einem Parameterwert zu dem ersten Parametersatz übereinstimmenden Parametersatz,
- Generieren des Veränderungsvorschlages für die identifizierten Simulationsläufe unter Berücksichtigung der empfangenen Fehlerbeschreibung.

Weiterhin betrifft die Erfindung eine Vorrichtung zur Datenverarbeitung umfassend Mittel zur Ausführung des obigen Verfahrens, ein Computerprogrammprodukt und einen entsprechenden computerlesbaren Datenträger.

## Beschreibung

Die Erfindung betrifft ein computerimplementiertes Verfahren zum Generieren eines Veränderungsvorschlages für wenigstens einen Simulationslauf einer eine Vielzahl an Simulationsläufen umfassende Simulation.

Weiterhin betrifft die Erfindung eine Vorrichtung zur Datenverarbeitung umfassend Mittel zur Ausführung des obigen Verfahrens.

Weiterhin betrifft die Erfindung ein Computerprogrammprodukt, umfassend Befehle, die bei der Ausführung des Programms durch einen Computer diesen veranlassen, das obige Verfahren auszuführen.

Ferner betrifft die Erfindung einen computerlesbaren Datenträger, auf dem das obige Computerprogrammprodukt gespeichert ist.

Fahrassistenzsysteme wie z.B. ein adaptiver Geschwindigkeitsregler und/oder Funktionen für das hochautomatisierte bzw. autonome Fahren können mithilfe diverser Überprüfungsmethoden verifiziert bzw. validiert werden. Beispielsweise kann für Funktionstests von Software von elektronischen Steuergeräten (ECUs) grundsätzlich Hardware in Form des Steuergerätes oder in Form eines Steuergeräteprototyps eingesetzt und die Steuerungssoftware im realen Fahrversuch getestet werden. Bei solchen Tests ist allerdings, neben den hohen Kosten und dem sehr hohen Zeitaufwand, die fehlende Reproduzierbarkeit, aufgrund der komplexen Umweltbedingungen, problematisch.

Weiterhin bieten sich sogenannte Hardware in the Loop (HiL) Tests an, bei dem das ECU über Ein- und Ausgänge an einen HiL-Simulator angeschlossen wird, wobei der HiL-Simulator die reale Umgebung nachbildet. Der HiL-Simulator emuliert die elektrischen Signale von Sensoren und Aktoren, die vom ECU gelesen werden. Beispielsweise werden bei einem HiL-Test eines Verbrennungsmotors die Signale von Kurbel- und Nockenwellensensoren von einer Angular Processing Unit (APU) erzeugt, die Teil der Hardware des HiL-Simulators ist. Das ECU wiederum generiert auf Basis dieser Signale mittels der Steuerungssoftware Sensor- und/oder Aktorsteuersignal, die wiederum zu einer Änderung der elektrischen Signale im HiL-Simulator führen. Die Strecke, die im realen Fahrversuch als Versuchsstrecke abgefahren und so unterschiedliche elektrische Signale für das Steuergerät generieren würde, wird innerhalb der HiL-Simulation als Streckenmodell abgebildet. Um einen HiL-Test durchzuführen, muss allerdings die Entwicklung eines ECUs schon relativ weit fortgeschritten sein, da das ECU als Hardware an den HiL-Simulator angeschlossen wird.

Um frühere Test der Steuerungssoftware zu ermöglichen, beispielsweise zu einem Entwicklungszeitpunkt, zu dem noch keine Hardware vorliegt, sind Hardwareunabhängige Softwaretests erforderlich. Hierfür können virtuelle Steuergeräte, auch V-ECUs genannt, verwendet werden. Mittels eines virtuellen Steuergerätes wird in einem Simulationsszenario ein echtes Steuergerät emuliert. Um möglichst realitätsnahe virtuelle Steuergeräte zu erstellen, kann ein virtuelles Steuergerät auf Basis der Steuerungssoftware des echten Steuergerätes erstellt werden. Dabei müssen natürlich einige Komponenten der Steuerungssoftware des echten Steuergerätes an die virtuelle Umgebung der Simulationsplattform angepasst werden. Dieses Vorgehen hat in der Regel das Ziel ein reales Steuergerät möglichst gut zu simulieren.

Das Verlegen der virtuellen Tests in immer frühere Entwicklungsphasen führt allerdings zu veränderten Anforderungen, bei denen nicht mehr das möglichst gute Nachahmen des Verhaltens eines spezifischen Steuergerätes im Vordergrund steht, sondern bei denen verschiedenste Anwendungen in einer flexiblen und hochmodularen Umgebung getestet werden sollen. Dies erfolgt in der Regel durch reproduzierbare, deterministische Testfahrten mit einem virtuellen Fahrzeug in einer virtuellen Umgebung. Das Fahrzeug, die Umgebung und die Tests - also die Verkehrsszenarien - können dabei alle frei vom Nutzer definiert werden. Auf diese Art und Weise können unter anderem neue Algorithmen für die Fahrzeugsteuerung in virtualisierten, autonomen Fahrzeugen erprobt werden.

Ein mögliches zu betrachtendes Verkehrsszenario ist beispielsweise ein sogenanntes Cut-In-Szenario. Das Cut-In-Szenario bezeichnet eine Verkehrssituation, bei welcher ein hochautomatisiertes bzw. autonomes Fahrzeug - im folgenden Ego-Fahrzeug genannt - in einer vorgegebenen Fahrspur fährt. Ein anderes Fahrzeug schert in einem bestimmten Abstand zum Ego-Fahrzeug und mit gegenüber dem Ego-Fahrzeug verringerter Geschwindigkeit von einer weiteren Fahrspur in die Fahrspur des Ego-Fahrzeugs ein.

Bei dem Verkehrsszenario ist in der Regel vorgesehen, dass die Geschwindigkeit des Ego-Fahrzeugs und des weiteren Fahrzeugs zunächst konstant ist. Da die Geschwindigkeit des Ego-Fahrzeugs allerdings höher ist als die des weiteren Fahrzeugs, muss das Ego-Fahrzeug abgebremst werden, um eine Kollision mit dem weiteren Fahrzeug zu vermeiden.

Das Verkehrsszenario kann mit unterschiedlichen Parameterwerten simuliert werden, beispielsweise verschiedene Abstände des Ego-Fahrzeugs und des weiteren Fahrzeuges zueinander beim Einscheren, oder unterschiedliche Geschwindigkeitsdifferenzen des Ego-Fahrzeuges zum weiteren Fahrzeug. Um einen möglichst hohen Erkenntnisgewinn aus der Simulation zu erlangen, werden also viele verschiedene Simulationsläufe in dem möglichen Parameterraum durchgeführt. Komplexe Verkehrsszenarien weisen viele Parameter und somit einen sehr großen abzudeckenden Parameterraum auf, so dass zur Abdeckung des Testraums typischerweise über Hunderttausend Simulationsläufe durchzuführen sind. Entsprechend sind solche Simulationen ressourcen- und/oder zeitintensiv.

Davon ausgehend ist es Aufgabe der Erfindung komplexe Verkehrsszenarien ressourcenschonend und kostensparend zu simulieren. Bevorzugt ist es Aufgabe der Erfindung den Wertebereich der Parameter der Simulation einzugrenzen.

Diese Aufgabe wird durch die Merkmale der unabhängigen Patentansprüche gelöst. Bevorzugte Weiterbildungen finden sich in den Unteransprüchen.

Erfindungsgemäß wird also ein computerimplementiertes Verfahren zum Generieren eines Veränderungsvorschlages für wenigstens einen Simulationslauf einer eine Vielzahl an Simulationsläufen umfassende Simulation bereitgestellt, mit den Schritten:
- Empfangen einer Fehlerbeschreibung eines Simulationslaufes einer ersten Simulation, wobei der Simulationslauf, dessen Fehlerbeschreibung empfangen wird, auf einem ersten Parametersatz umfassend mehrere Parameterwerte basiert,
- Identifizieren von noch nicht beendeter Simulationsläufe der ersten Simulation oder einer zweiten Simulation mit einem in wenigstens einem Parameterwert zu dem ersten Parametersatz übereinstimmenden Parametersatz,
- Generieren des Veränderungsvorschlages für die identifizierten Simulationsläufe unter Berücksichtigung der empfangenen Fehlerbeschreibung.

Ein Aspekt der Erfindung ist also, dass auf Basis von empfangenen Fehlerbeschreibungen von bisher schon gestarteten Simulationsläufen der ersten Simulation, für noch nicht beendete Simulationsläufe der ersten Simulation oder für bisher noch nicht beendete Simulationsläufe der zweiten Simulation Veränderungsvorschläge generiert werden, damit Probleme in den noch nicht beendeten Simulationsläufen vermieden werden können. Beim Verfahren werden in anderen Worten also automatisiert noch nicht beendete Simulationsläufe identifiziert, bei denen aufgrund des zumindest teilweise übereinstimmenden Parametersatzes zu Simulationsläufen, deren Fehlerbeschreibungen empfangen wurden, die Wahrscheinlichkeit hoch ist, dass diese Simulationsläufe ebenfalls fehlerbehaftet sind. Entsprechend können durch das Berücksichtigen der bisherigen Fehlerbeschreibungen schon vor Beendigung aller Simulationsläufe der Simulation die generierten Veränderungsvorschläge umgesetzt werden, wodurch Ressourcen und Kosten gespart werden können.

Unter Simulation wird vorliegend die Implementierung oder Realisierung eines Simulationsmodells verstanden. Das Simulationsmodell stellt eine Abstraktion des zu simulierenden Systems beispielsweise in seiner Struktur, Funktion, und/oder seinem Verhalten dar. Das Durchführen der Simulation mit konkreten Parameterwerten wird als Simulationslauf bezeichnet. Dessen Ergebnisse können nach Beendigen des Simulationslaufes interpretiert und auf das zu simulierende System übertragen werden.

Simulieren bedeutet demnach, ein funktionales Simulationsmodell in Bewegung zu versetzen und sein Verhalten in bestimmten Situationen zu beobachten. Je nach Komplexität des Modells kann dieser Vorgang langwierig und rechenintensiv sein - auch, weil ein einziger Simulationslauf für einen Erkenntnisgewinn nicht genügt. In anderen Worten weist die Simulation also eine Vielzahl an Simulationsläufe auf, typischerweise in der Größenordnung von 100 000 Simulationsläufen.

Im Kontext von Simulationen bezeichnet der Parametersatz diejenigen Aspekte des Simulationsmodells, die bewusst flexibel angelegt wurden. Indem die Parameter des Simulationsmodell auf konkrete Werte des Parametersatzes gesetzt werden, wird das Simulationsmodell in einen bestimmten Zustand versetzt, dessen Verhalten dann simuliert wird. In anderen Worten erfordert also ein Durchgang des Simulationslaufes die Festlegung konkreter Werte für die Parameter des Parametersatz.

Bei der Simulation kann dann beispielsweise über mehrere Simulationsläufe der Wert für genau einen der Parameter des Parametersatzes gezielt variiert werden, so dass sich die gegebenenfalls unterschiedlichen Ergebnisse der Simulationsläufe auf den Einfluss genau dieses Parameters zurückführen lassen. Wenn mehrere Parameter systematisch und gezielt variiert werden sollen und/oder Interaktionen zwischen den Parametern verstanden werden sollen, ist wie bereits erwähnt eine Vielzahl an Simulationsläufen notwendig.

Neben der gezielten vorgegebenen Variation der Werte von Parametern kann ein weiterer Grund für die Notwendigkeit der Vielzahl an Simulationsläufen in stochastischen Parametern begründet sein. Es kann sinnvoll sein, bestimmte Eigenschaften einer Simulation zufällig festzulegen - oder das Simulationsmodell befolgt in jedem Simulationslauf mit einer bestimmten Wahrscheinlichkeit die eine oder andere Regel. Enthält eine Simulation solche Zufallselemente, die über stochastischen Parameter abgebildet werden, ist ein einzelner Simulationslauf nur bedingt aussagekräftig. Es braucht somit zwingend mehrere Wiederholungen, um das Verhalten des Simulationsmodells in einer spezifischen Situation (mit ansonsten unveränderten Parametern) abzuschätzen.

Bevorzugt weisen die Vielzahl der Simulationsläufe zumindest teilweise unterschiedliche Parameterwerte zueinander auf. Derart decken die Simulationsläufe den möglichen Parameterraum der Simulation ab.

Wenn ein Simulationslauf gestartet wird, kann es sein, dass beim Durchführen des Simulationslaufes eine Fehlerbeschreibung generiert wird. Im ersten Schritt des Verfahrens werden solche Feherbeschreibungen der ersten Simulation empfangen. In Bezug zu den Fehlerbeschreibungen wurden diese beispielsweise generiert, weil ein technisches Problem - wie eine fehlende Datei - aufgetreten ist, oder weil ein Parameter einen Wert aufweist, der außerhalb von vordefinierten Spezifikationen liegt. In Bezug zum zweitgenannten setzt beispielsweise ein Überholszenario zweier Fahrzeuge voraus, dass das zu Beginn hintere Fahrzeug eine höhere Geschwindigkeit aufweist als das zu Beginn des Überholszenarios vordere Fahrzeug, das überholt werden soll. Wenn der Parameterwert für die Geschwindigkeit des hinteren Fahrzeuges beispielsweise so gering ist, dass gar kein Überholszenario stattfinden kann, liegt der Wert des Parameters außerhalb von vordefinierten Spezifikationen.

In einem weiteren Schritt des Verfahrens werden diejenigen Simulationsläufe der ersten oder zweiten Simulation identifiziert, die noch nicht beendetet sind und zudem einen Parametersatz aufweisen, bei denen wenigstens ein Parameter den gleichen Wert aufweist, wie derjenige Simulationslauf, dessen Fehlerbeschreibung empfangen wurde. Noch nicht beendete Simulationsläufe sind Simulationsläufe, die noch nicht gestartete wurden oder Simulationsläufe, die zwar schon gestartet sind, aber noch nicht beendet wurden.

In einem weiteren Schritt des Verfahrens wird dann unter Berücksichtigung der empfangenen Fehlerbeschreibung der Veränderungsvorschlag für die identifizierten Simulationsläufe generiert.

Gemäß einer bevorzugten Weiterbildung der Erfindung ist vorgesehen, dass das Verfahren den Schritt Verändern eines oder mehrerer bisher noch nicht beendeter Simulationsläufe der ersten oder zweiten Simulation unter Berücksichtigung des generierten Veränderungsvorschlages umfasst. Bevorzugt werden also auf Basis des Veränderungsvorschlages automatisiert Änderungen an den bisher noch nicht beendeten Simulationsläufen der ersten oder zweiten Simulation durchgeführt. Derart können ohne Interaktion mit einem Nutzer Kosten eingespart werden und/oder Ressourcen geschont werden.

In diesem Zusammenhang ist gemäß einer weiteren bevorzugten Weiterbildung der Erfindung vorgesehen, dass der generierte Veränderungsvorschlag ein Abbrechen noch nicht beendeter Simulationsläufe, ein Nichtdurchführen noch nicht gestarteter Simulationsläufe, und/oder ein Anpassen der Parameterwerte bei noch nicht gestarteten Simulationsläufen umfasst. Durch das Abbrechen noch nicht beendeter Simulationsläufe, sowie durch das Nichtdurchführen noch nicht gestarteter Simulationsläufe wird die Anzahl an Simulationsläufen reduziert, was Ressourcen, Zeit und Kosten spart. Es werden also Simulationsläufe, bei denen aufgrund der empfangenen Fehlerbeschreibungen zu erwarten ist, dass sie keinen Erkenntnisgewinn bringen und/oder fehlerbehaftet sind, gar nicht erst durchgeführt. Durch das Anpassen der Parameterwerte bei noch nicht gestarteten Simulationsläufen kann die Simulation mit Werten durchgeführt werden, die sich innerhalb der vordefinierten Spezifikationen bewegen, so dass der Erkenntnisgewinn aus den durchgeführten Simulationen steigt.

Gemäß einer weiteren bevorzugten Weiterbildung der Erfindung ist vorgesehen, dass das Verfahren den zusätzlichen Schritt Generieren einer Fehlerbeschreibung eines Simulationslaufes durch Starten, Durchführen und/oder Beenden eines Simulationslaufes der ersten Simulation umfasst. Die im ersten Schritt des Verfahrens empfangenen Fehlerbeschreibungen können aus genau jener ersten Simulation stammen, zu der das Verfahren zum Generieren des Veränderungsvorschlages durchgeführt wird.

Alternativ ist vorgesehen, dass die empfangenen Fehlerbeschreibungen aus der ersten Simulation stammen, das Verfahren zum Generieren des Veränderungsvorschlages aber für eine andere - sprich die zweite Simulation - durchgeführt wird. Beispielsweise kann die erste Simulation Stunden vor der zweiten Simulation gestartete worden sein und zum Start der zweiten Simulation noch andauern. Alternativ kann die ersten Simulation Tage vor der zweiten Simulation gestartet worden sein, und zum Zeitpunkt des Startes der zweiten Simulation schon beendet sein. Insbesondere bei großen Entwicklungsprojekten, bei denen mit mehreren Teams zusammengearbeitet wird, ermöglicht das vorliegende Verfahren, dass Erkenntnisgewinne auf Grund der generierten Fehlerbeschreibungen der ersten Simulation automatisiert zum Einsparen von Ressourcen und/oder Kosten bei anderen Teams in Bezug zur zweiten Simulation genutzt werden.

Wie bereits erwähnt kann die Fehlerbeschreibung zu unterschiedlichen Zeitpunkten des Simulationslaufes generiert worden sein. Das Generieren einer Fehlerbeschreibung kann - muss aber nicht - zum Abbruch des Simulationslaufes führen. Wenn die Fehlerbeschreibungen beispielsweise aufgrund einer fehlenden Datei generiert wird oder weil ein Laufzeitfehler oder ein Hardware-Problem während des Simulationslaufes auftaucht, kann es technisch unmöglich sein, den Simulationslauf weiter durchzuführen. Wenn hingegen die Fehlerbeschreibung aufgrund eines Parameterwertes außerhalb einer vordefinierten Spezifikation auftritt, kann der Simulationslauf technisch beendet werden, allerdings kann der Erkenntnisgewinn des beendeten Simulationslaufes eventuell gering sein.

Gemäß einer weiteren bevorzugten Weiterbildung der Erfindung ist vorgesehen, dass der Schritt des Empfangens der Fehlerbeschreibung eines Simulationslaufes der ersten Simulation, ein mehrfaches Empfangen der beim Starten, Durchführen und/oder Beenden der Vielzahl an Simulationsläufen generierten Fehlerbeschreibungen umfasst. In anderen Worten wird bevorzugt also nicht nur eine Fehlerbeschreibung empfangen, sondern es werden während der Simulation, die die Vielzahl der Simulationsläufe umfasst, kontinuierlich die generierten Fehlerbeschreibungen empfangen.

In diesem Zusammenhang ist gemäß einer weiteren bevorzugten Weiterbildung der Erfindung vorgesehen, dass das Verfahren den Schritt Speichern der empfangenen Fehlerbeschreibungen in einer Datenbank umfasst. In anderen Worten füllt sich also während der Simulation, bei der die Vielzahl der Simulationsläufe durchgeführt werden, sukzessive über die Zeit die Datenbank mit den empfangenen Fehlerbeschreibungen.

Gemäß einer weiteren bevorzugten Weiterbildung der Erfindung ist vorgesehen, dass das Verfahren den Schritt Gewichten der empfangenen Fehlerbeschreibung umfasst, und der Veränderungsvorschlag unter Berücksichtigung der Gewichtung der Fehlerbeschreibung generiert wird. Durch das Gewichten der Fehlerbeschreibungen können gezielt Veränderungsvorschläge generiert werden. Ist beispielsweise ein Fehler schwerwiegend kann die entsprechende Fehlerbeschreibung höher gewichtet werden. Basierend darauf kann bevorzugt vorgesehen sein, dass der generierte Veränderungsvorschlag ein Abbrechen der noch nicht beendeter Simulationsläufe, und ein Nichtdurchführen noch nicht gestarteter Simulationsläufe umfasst.

In diesem Zusammenhang ist gemäß einer weiteren bevorzugten Weiterbildung vorgesehen, dass der Schritt des Gewichtens der empfangenen Fehlerbeschreibung ein Unterteilen der empfangenen Fehlerbeschreibungen in Klassen umfasst. Bevorzugt werden die empfangenen Fehlerbeschreibungen unterteilt in a) lokale Fehler, die sich nur auf wenige der Simulationsläufe - beispielsweise unter 1 % der Simulationsläufe - auswirken, b) Fehler, die sich auf eine größere Gruppe - beispielsweise 10 % der Simulationsläufe - auswirkt, und c) globale Fehler, die sich auf alle Simulationsläufe der Simulation auswirken.

Gemäß einer weiteren bevorzugten Weiterbildung ist vorgesehen, dass der Schritt des Gewichtens der empfangenen Fehlerbeschreibung ein Berücksichtigen einer Häufigkeit der Fehlerbeschreibung über die Vielzahl an Simulationsläufen umfasst. Wie bereits erwähnt werden die empfangenen Fehlerbeschreibungen in einer Datenbank gespeichert. Es wird also bevorzugt analysiert wie häufig eine spezifische Fehlerbeschreibung in der Datenbank vorhanden ist und wie sich die Häufigkeitsverteilung der Fehlerbeschreibung über die Zeit, in der die Simulation durchgeführt wird, verändert.

Weiterhin ist gemäß einer bevorzugten Weiterbildung des Verfahrens vorgesehen, dass der Schritt des Gewichtens der empfangenen Fehlerbeschreibung durch ein neuronales Netzwerk durchgeführt wird. Bevorzugt kann das Gewichten und/oder das Unterteilen der Fehlerbeschreibungen in Klassen durch ein künstliches neuronales Netzwerk und/oder mittels auf maschinellem Lernen basierenden Algorithmen durchgeführt wird.

In Zusammenhang mit dem Gewichten kann gemäß einer weiteren bevorzugten Weiterbildung der Erfindung vorgesehen sein, dass der Schritt des Gewichtens der empfangenen Fehlerbeschreibung unter Berücksichtigung von Nutzer-Input-Daten durchgeführt wird. Dies weist den Vorteil auf, dass der Nutzer manuell in die Gewichtung eingreifen kann und diese beeinflussen kann.

Gemäß einer weiteren bevorzugten Weiterbildung der Erfindung ist vorgesehen, dass der Schritt des Identifizierens von bisher noch nicht beendeter Simulationsläufe der ersten Simulation oder der zweiten Simulation mit einem in wenigstens einem Parameterwert zu dem ersten Parametersatz übereinstimmenden Parametersatz der empfangenen Fehlerbeschreibung ein Durchführen einer Clusteranalyse umfasst. Bevorzugt wird also mit einem Verfahren zur Entdeckung von Ähnlichkeitsstrukturen diejenigen noch nicht beendeter Simulationsläufe identifiziert, bei denen aufgrund der bevorzugt in der Datenbank vorliegenden Fehlerbeschreibungen davon auszugehen ist, dass diese ebenfalls fehlerbehaftet sind.

Weitere technische Merkmale und Vorteile ergeben sich für den Fachmann aus der nachfolgenden Beschreibung einer Vorrichtung zur Datenverarbeitung, eines Computerprogrammproduktes und/oder eines computerlesbaren Datenträgers, sowie aus dem Ausführungsbeispiel.

Die Aufgabe wird auch gelöst durch eine Vorrichtung zur Datenverarbeitung umfassend Mittel zur Ausführung des oben beschriebenen Verfahrens. Bevorzugt handelt es sich bei der Vorrichtung zur Datenverarbeitung um eine serverbasierte Vorrichtung. Dies erlaubt, dass der Nutzer selbst keine Hardware-Ressourcen zum Durchführen des Verfahrens zum Generieren des Veränderungsvorschlages für wenigstens einen Simulationslauf der eine Vielzahl an Simulationsläufen umfassenden Simulation vorhalten muss, sondern dass das Verfahren dem Nutzer auf einem Server zur Verfügung gestellt wird.

Weiterhin betrifft die Erfindung ein Computerprogrammprodukt, umfassend Befehle, die bei der Ausführung des Programms durch einen Computer diesen veranlassen, das obige Verfahren auszuführen.

Zudem betrifft die Erfindung einen computerlesbaren Datenträger, auf dem das obige Computerprogrammprodukt gespeichert ist. Bevorzugt sind die Befehle auf dem computerlesbaren Datenträger eingebettet, und die Befehle bewirken, wenn sie von einem Prozessor des Computers ausgeführt werden, dass der Prozessor das Verfahren zum Generieren des Veränderungsvorschlages für wenigstens einen Simulationslauf der eine Vielzahl an Simulationsläufen umfassende Simulation auszuführt.

Die technischen Vorteile und Effekte der Vorrichtung zur Datenverarbeitung, des Computerprogrammproduktes und des computerlesbaren Datenträgers ergeben sich für den Fachmann durch die Beschreibung des Verfahrens zum Generieren des Veränderungsvorschlages, sowie durch das nachfolgend beschriebene Ausführungsbeispiel.

Die Erfindung wird nachfolgend unter Bezugnahme auf die Zeichnung näher erläutert. Die dargestellte Ausführungsform ist stark schematisiert, d.h. Abstände, Dimensionen und Abmessungen sind nicht maßstäblich und weisen, sofern nicht anders angegeben, auch keine ableitbaren geometrischen Relationen zueinander auf.

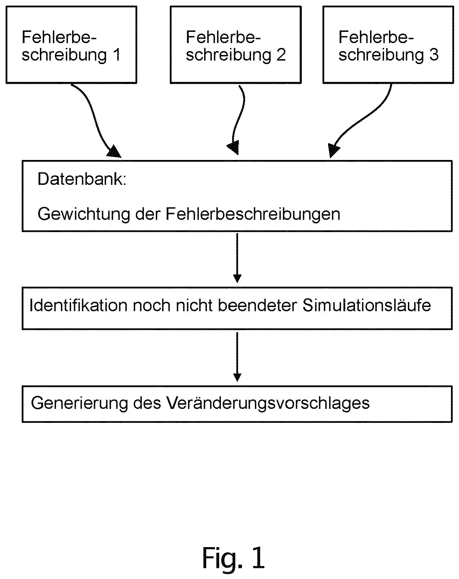

In der Zeichnung zeigt
- Fig. 1: schematisch ein Ablaufdiagramm eines Verfahrens zum Generieren eines Veränderungsvorschlages für wenigstens einen Simulationslauf einer eine Vielzahl an Simulationsläufen umfassende Simulation, gemäß einem bevorzugten Ausführungsbeispiel der Erfindung.

Figur 1 zeigt schematisch ein Ablaufdiagramm eines Verfahrens zum Generieren eines Veränderungsvorschlages für wenigstens einen Simulationslauf einer eine Vielzahl an Simulationsläufen umfassende Simulation, gemäß einem bevorzugten Ausführungsbeispiel der Erfindung.

In einem ersten Schritt des Verfahrens wird eine Fehlerbeschreibung eines Simulationslaufes einer ersten Simulation empfangen, wobei der Simulationslauf, dessen Fehlerbeschreibung empfangen wird, auf einem ersten Parametersatz umfassend mehrere Parameterwerte basiert. Im vorliegenden Ausführungsbeispiel ist wie in Figur 1 gezeigt vorgesehen, dass mehrfach Fehlerbeschreibungen empfangen werden und die empfangenen Fehlerbeschreibungen in einer Datenbank gespeichert werden.

Zudem ist im vorliegenden Ausführungsbeispiel vorgesehen, dass die empfangenen und in der Datenbank gespeicherten Fehlerbeschreibungen aufgrund ihrer Häufigkeit in der Datenbank gewichtet werden.

In einem weiteren Schritt des Verfahrens werden noch nicht beendete Simulationsläufe der ersten Simulation oder einer zweiten Simulation identifiziert, die einen Parametersatz aufweisen, der in wenigstens einem Parameterwert zu dem ersten Parametersatz übereinstimmt. Vorliegend wird dies über eine Clusteranalyse bewerkstelligt.

Zudem weist das Verfahren den nachfolgenden Schritt des Generierens des Veränderungsvorschlages für die identifizierten Simulationsläufe unter Berücksichtigung der empfangenen Fehlerbeschreibung auf. Die generierten Veränderungsvorschläge berücksichtigt zudem die Gewichtung der Fehlerbeschreibung.

Das Verfahren wird nachfolgenden an einem Beispiel erläutert. Zwei Simulationen mit je von 100 000 Simulationsläufen werden zeitversetzt gestartet. Zunächst wird die erste Simulation, genannt Run_1, gestartet. Die erste Simulation, Run_1, nutzt über ihre Konfiguration einen bestimmten Testcase, der durch einen ersten Parametersatz mit spezifischen Parameterwerten definiert wird.

Die zweite Simulation, genannt Run_2, nutzt ebenfalls den bestimmten Testcase, weist also in ihrem Parametersatz übereinstimmende Parameterwerte auf, und wird etwa 5 Stunden später als Run_1 gestartet.

Nach 50 000 Simulationsläufen von Run_1 kommt es zu einem Fehler und eine entsprechende Fehlerbeschreibung wird generiert. Die Fehlerbschreibung wird in der Datenbank gespeichert. Der der Fehlerbeschreibung zugrundeliegende Fehler in Run_1 ist so schwerwiegend, dass alle Simulationsläufe von Run_1, die mit diesem bestimmten Testcase ausgeführt werden, fehlerhaft und als folge davon nicht aussagekräftig sind. Die Fehlerbeschreibung wird entsprechend in der Datenbank als kritisch eingestuft.

Auf Basis dieser Einstufung des Fehlers in der Datenbank wird für Run_2, bei dem der Fehler bisher noch nicht aufgetreten ist, ein Veränderungsvorschlag generiert, der darin besteht, dass die bisher noch nicht beendeten Simulationsläufe von Run_2 abgebrochen werden.

## Patentansprüche

1. Computerimplementiertes Verfahren zum Generieren eines Veränderungsvorschlages für wenigstens einen Simulationslauf einer eine Vielzahl an Simulationsläufen umfassende Simulation, mit den Schritten:
- Empfangen einer Fehlerbeschreibung eines Simulationslaufes einer ersten Simulation, wobei der Simulationslauf, dessen Fehlerbeschreibung empfangen wird, auf einem ersten Parametersatz umfassend mehrere Parameterwerte basiert,
- Identifizieren von noch nicht beendeter Simulationsläufe der ersten Simulation oder einer zweiten Simulation mit einem in wenigstens einem Parameterwert zu dem ersten Parametersatz übereinstimmenden Parametersatz,
- Generieren des Veränderungsvorschlages für die identifizierten Simulationsläufe unter Berücksichtigung der empfangenen Fehlerbeschreibung.

2. Verfahren nach Anspruch 1, wobei das Verfahren den Schritt Verändern eines oder mehrerer bisher noch nicht beendeter Simulationsläufe der ersten oder zweiten Simulation unter Berücksichtigung des generierten Veränderungsvorschlages umfasst.

3. Verfahren nach einem der vorherigen Ansprüche, wobei der generierte Veränderungsvorschlag ein Abbrechen noch nicht beendeter Simulationsläufe, ein Nichtdurchführen noch nicht gestarteter Simulationsläufe, und/oder ein Anpassen der Parameterwerte bei noch nicht gestarteten Simulationsläufen umfasst.

4. Verfahren nach einem der vorherigen Ansprüche, wobei das Verfahren den zusätzlichen Schritt Generieren einer Fehlerbeschreibung eines Simulationslaufes durch Starten, Durchführen und/oder Beenden eines Simulationslaufes der ersten Simulation umfasst.

5. Verfahren nach einem der vorherigen Ansprüche, wobei der Schritt des Empfangens der Fehlerbeschreibung eines Simulationslaufes der ersten Simulation, ein mehrfaches Empfangen der beim Starten, Durchführen und/oder Beenden der Vielzahl an Simulationsläufen generierten Fehlerbeschreibungen umfasst.

6. Verfahren nach einem der vorherigen Ansprüche, wobei das Verfahren den Schritt Speichern der empfangenen Fehlerbeschreibungen in einer Datenbank umfasst.

7. Verfahren nach einem der vorherigen Ansprüche, wobei das Verfahren den Schritt Gewichten der empfangenen Fehlerbeschreibung umfasst, und der Veränderungsvorschlag unter Berücksichtigung der Gewichtung der Fehlerbeschreibung generiert wird.

8. Verfahren nach Anspruch 7, wobei der Schritt des Gewichtens der empfangenen Fehlerbeschreibung ein Unterteilen der empfangenen Fehlerbeschreibungen in Klassen umfasst.

9. Verfahren nach Anspruch 7 oder 8, wobei der Schritt des Gewichtens der empfangenen Fehlerbeschreibung ein Berücksichtigen einer Häufigkeit der Fehlerbeschreibung über die Vielzahl an Simulationsläufen umfasst.

10. Verfahren nach einem der Ansprüche 7, bis 9, wobei der Schritt des Gewichtens der empfangenen Fehlerbeschreibung durch ein neuronales Netzwerk durchgeführt wird.

11. Verfahren nach einem der Ansprüche 7 bis 10, wobei der Schritt des Gewichtens der empfangenen Fehlerbeschreibung unter Berücksichtigung von Nutzer-Input-Daten durchgeführt wird.

12. Verfahren nach einem der vorherigen Ansprüche, wobei der Schritt des Identifizierens von bisher noch nicht beendeter Simulationsläufe der ersten Simulation oder der zweiten Simulation mit einem in wenigstens einem Parameterwert zu dem ersten Parametersatz übereinstimmenden Parametersatz der empfangenen Fehlerbeschreibung ein Durchführen einer Clusteranalyse umfasst.

13. Vorrichtung zur Datenverarbeitung umfassend Mittel zur Ausführung des Verfahrens nach einem der Ansprüche 1 bis 12.

14. Computerprogrammprodukt, umfassend Befehle, die bei der Ausführung des Programms durch einen Computer diesen veranlassen, das Verfahren nach einem der Ansprüche 1 bis 12 auszuführen.

15. Computerlesbarer Datenträger, auf dem das Computerprogrammprodukt nach dem vorhergehenden Anspruch gespeichert ist.
